# EUROPÄISCHE PATENTANMELDUNG

(11) **EP 1 132 268 A1**
(43) Veröffentlichungstag der Anmeldung: **12.09.2001**
(21) Anmeldenummer: 00104999.8
(22) Anmeldetag: 09.03.2000
(51) Int. Cl.: B60S 1/52, B60S 1/48

(54) **Reinigungsanlage**

(71) Anmelder: ROBERT BOSCH GMBH, 70442 Stuttgart (DE)
(72) Erfinder: Cramer, Hans-Dieter, 76477 Elchesheim-Illingen (DE); Kraemer, Godelieve, 76549 Huegelsheim (DE); Ilic, Erich, 72805 Unterhausen (DE); Leutsch, Wolfgang, 77830 Buehlertal (DE); Guth, Torsten, 72768 Reutlingen (DE); Stroppa, Oliver, 70839 Gerlingen (DE); Kanz, Thomas, 71229 Leonberg (DE)

(57) **Zusammenfassung**

Die Erfindung betrifft eine Reinigungsanlage, insbesondere für Scheinwerfer, Fahrzeugscheiben oder dergleichen von Kraftfahrzeugen, mit einer hydraulischen Fördereinrichtung, die ein gefrierfähiges Fluid, insbesondere Wasser, von einem Vorratsbehälter zu wenigstens einer, einem zu reinigenden Objekt zugeordneten Austrittsvorrichtung fördert.

Es ist vorgesehen, daß den fluidführenden Elementen (12, 14, 16) der Reinigungsanlage (10) wenigstens ein volumenelastisches Element (50) zugeordnet ist.

## Beschreibung

Die Erfindung betrifft eine Reinigungsanlage, insbesondere für Scheinwerfer, Fahrzeugscheiben oder dergleichen, mit den im Oberbegriff des Anspruchs 1 genannten Merkmalen.

### Stand der Technik

Reinigungsanlagen der gattungsgemäßen Art sind bekannt. Sie dienen insbesondere zur Reinigung der Scheinwerfer oder der Fahrzeugscheiben von Kraftfahrzeugen. Dazu weisen sie eine hydraulische Fördereinrichtung auf, die ein zu förderndes Fluid aus einem Vorratsbehälter zu einer Austrittsvorrichtung fördert. Die Austrittsvorrichtung ist dabei einem zu reinigenden Objekt zugeordnet. Alle während der Förderung des Fluids durchströmten Elemente der Reinigungsanlage werden nachfolgend als fluidführende Elemente bezeichnet.

Die Austrittsvorrichtung kann beispielsweise aus einem Zylinder mit einem Hohlkolben bestehen. Dabei weist der Hohlkolben einen Kopf auf, der eine Ventildüse trägt, über die das Fluid versprüht wird. Der Hohlkolben kann dabei mittels eines Federelementes reversierbar gelagert werden.

Nachteilig bei den bekannten Reinigungsanlagen ist, daß sie nur eine geringe Frostbeständigkeit aufweisen. Bei einer Erstarrung eines gefrierfähigen Fluids innerhalb der zur Förderung des Fluids notwendigen Elemente der Reinigungsanlage kommt es zu einer Volumenausdehnung, die zur Erhöhung eines Innendrucks innerhalb der Reinigungsanlage führt. Sofern kein Druckausgleich mehr möglich ist, kann diese mechanische Belastung zur Verformung oder gar zum Bruch der fluidführenden Elemente führen.

### Vorteile der Erfindung

Der Erfindung liegt die Aufgabe zugrunde, eine Reinigungsanlage der gattungsgemäßen Art zu schaffen, mittels der in einfacher und kostengünstiger Weise eine Beschädigung der fluidführenden Elemente während des Erstarrens des Fluids verhindert wird.

Erfindungsgemäß wird diese Aufgabe durch eine Reinigungsanlage mit den im Anspruch 1 genannten Merkmalen gelöst. Dadurch, daß den fluidführenden Elementen der Reinigungsanlage wenigstens ein volumenelastisches Element zugeordnet ist, kann der Druckanstieg im Inneren der fluidführenden Elemente, der infolge der Erstarrung des Fluids auftritt, kompensiert werden.

In einer bevorzugten Ausgestaltung der Erfindung ist vorgesehen, daß das volumenelastische Element auf eine Innenseite der fluidführenden Elemente als eine Schicht aufgebracht wird. Alternativ dazu kann das volumenelastische Element rohrförmig im Inneren der fluidführenden Elemente untergebracht sein oder eine andere geeignete dreidimensionale Struktur aufweisen. Seine Formvielfalt findet lediglich darin Beschränkung, daß die Förderung des Fluids während eines Normalbetriebs nicht verhindert oder gestört wird.

Ferner ist es besonders bevorzugt, das volumenelastische Element aus einem Elastomer, insbesondere aus Kautschuk, wie beispielsweise Ethylen-Propylen-Dien-Kautschuk (EPDM), herzustellen, weil diese Materialien eine kostengünstige und einfache Herstellung ermöglichen. Selbstverständlich sind auch andere volumenelastische Materialien einsetzbar, wie beispielsweise gasgefüllte Hohlkörper und Einlagen mit geringer Dichte und hohem luftgefüllten Porenanteil. Wesentlich ist lediglich, daß sie unter Druckanstieg komprimierbar sind.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine schematische Ansicht einer Reinigungsanlage;
- Figur 2: eine schematische Schnittansicht einer Austrittsvorrichtung;
- Figuren 3 und 4: schematische Schnittansichten durch ein fluidführendes Element einer Austrittsvorrichtung mit einem volumenelastischen Element und
- Figur 5a und 5b: eine schematische Ansicht einer Austrittsvorrichtung in einem Stoßfänger.

### Beschreibung des Ausführungsbeispiels

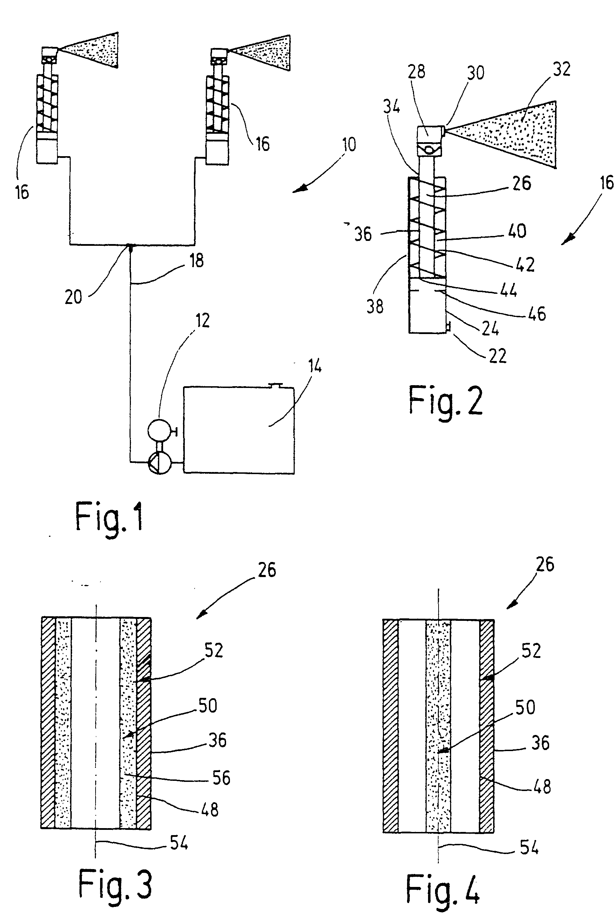

Figur 1 zeigt in einer schematischen Ansicht eine Reinigungsanlage 10, wie sie insbesondere zur Reinigung eines Scheinwerfers von Kraftfahrzeugen eingesetzt wird. Die Reinigungsanlage 10 umfaßt dabei eine Fördereinrichtung 12, einen Vorratsbehälter 14 und zwei Austrittsvorrichtungen 16. Die Austrittsvorrichtungen 16 sind mit dem Vorratsbehälter 14 beziehungsweise der Fördereinrichtung 12 über Leitungen 18 und ein T-Stück 20 verbunden. Selbstverständlich sind die einzelnen Elemente, die während der Förderung eines Fluids (fluidführende Elemente) in der Reinigungsanlage 10 durchströmt werden, variabel, und es ist lediglich zur Verdeutlichung der erfindungsgemäßen Lösung die abgebildete Ausführungsform gewählt.

Die Fördereinrichtung 12 kann eine Pumpe sein, insbesondere eine Hochdruckpumpe, und die Leitungen 18 sowie der Vorratsbehälter 14 können aus einem gegebenenfalls elastischen Kunststoff hergestellt werden.

In der Figur 2 ist die Austrittsvorrichtung 16 der Reinigungsanlage 10 in einer schematischen Schnittansicht dargestellt. Sie besteht aus einem Zylinder 24 mit einer Eintrittsöffnung 22 und einem Hohlkolben 26. Der Hohlkolben 26 hat einen Kopf 28, der eine Ventildüse 30 trägt, durch die das Fluid in Form eines Sprühkegels 32 versprüht werden kann. Der Hohlkolben 26 ragt aus einer Öffnung 34 des Zylinders 24 und hat einen Außendurchmesser, der kleiner ist als der Innendurchmesser des Zylinders 24. Auf diese Weise bildet sich zwischen der Außenseite 36 des Hohlkolbens 26 und der Innenseite 38 des Zylinders 24 ein Hohlraum 40 aus. In dem Hohlraum 40 ist ein Federelement 42 untergebracht, das an einem Vorsprung 44 des Hohlkolbens 26 und an dem Zylinder 24 anliegt. Ferner weist der Zylinder 24 auf seiner Innenseite 38 einen Vorsprung 46 auf.

Durch das Federelement 42 wird der Hohlkolben 26 in einer Ruhelage derart mit einer Kraft beaufschlagt, daß er an dem Vorsprung 46 des Zylinders 24 anliegt. Wird durch die Fördereinrichtung 12 das Fluid in Richtung der Austrittsvorrichtung 16 gefördert, so tritt dieses durch die Eintrittsöffnung 22 in den Zylinder 24 ein. Da der Hohlkolben 26 beziehungsweise die Ventildüse 30 eine Verjüngung darstellt, kommt es zu einem Druckanstieg, infolgedessen der Hohlkolben 26 nach außen gedrückt wird und das Federelement 42 gespannt wird. Nach einer Abschaltung der Fördereinrichtung 12 erfolgt mittels des Federelementes 42 eine reversierende Bewegung des Hohlkolbens 26, bis dieser wieder an dem Vorsprung 46 anliegt.

Eine Erstarrung des Fluids, insbesondere Wasser - bei Umgebungstemperaturen unterhalb des Gefrierpunktes des Fluids -, in einer solchen Austrittsvorrichtung 16 hat häufig zur Folge, daß sowohl der Hohlkolben 26 als auch der Zylinder 24 verformt werden oder gar bersten. Weiterhin kommt es zu einem ungewollten Ausfahren des Hohlkolbens 26, der sich dann in störender Weise in einem Lichtkegel der Scheinwerfer befinden kann.

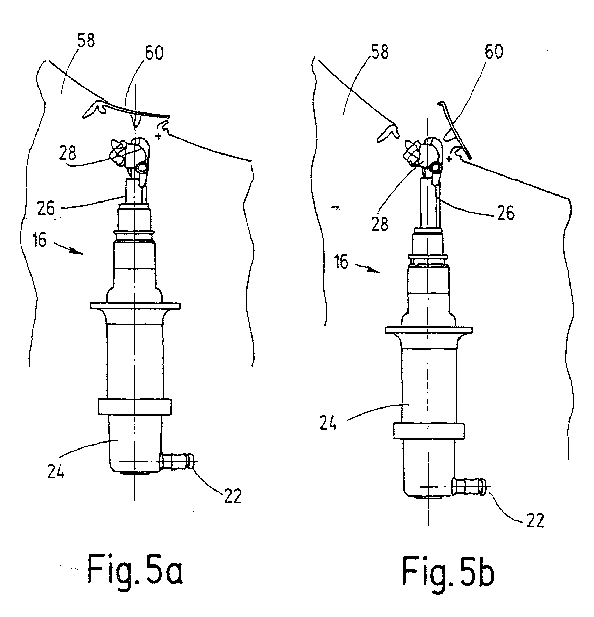

Häufig wird die Austrittsvorrichtung 16 aus Gründen der Aerodynamik in einem Stoßfänger 58 integriert, wobei der Hohlkolben 26 in einer Ruhelage unterhalb einer Klappe 60 angeordnet ist (Figur 5a). Beim Erstarren des Fluids wird aufgrund einer Volumenausdehnung, die überwiegend axial auf den Hohlkolben 26 gerichtet ist, dieser allmählich ausgefahren, so daß sich die Klappe 60 öffnet (Figur 5b). Da die geöffnete Klappe 60 für einen Fahrer häufig als optisch störend empfunden wird und dieser gegebenenfalls die Klappe 60 und damit den Hohlkolben 26 wieder zurücklegt, kann es so zu einer Beschädigung der Austrittsvorrichtung 16 kommen. Eine alternative, etwas zurückgesetzte Positionierung der Austrittsvorrichtung 16 ist aufgrund fehlenden Bauraums oft nicht möglich.

Indem in dem erläuterten Ausführungsbeispiel der Austrittsvorrichtung 16 ein volumenelastisches Element 50 zugeordnet wird, kann ein schädigender Druckanstieg im Inneren der Austrittsvorrichtung 16 kompensiert werden. Die Figur 3 zeigt beispielhaft eine schematische Schnittansicht durch einen derart modifizierten Hohlkolben 26. Das volumenelastische Element 50 ist dabei als eine Schicht 56 auf einer Innenseite 48 des Hohlkolbens 26 aufgebracht. Eine Dicke der Schicht 56 kann variabel gewählt werden.

Die Figur 4 zeigt eine weitere alternative Ausführungsform des volumenelastischen Elements 50. Dabei befindet sich das volumenelastische Element 50 im Inneren des Hohlkolbens 26, beispielsweise entlang einer Mittelachse 54. Selbstverständlich stellen die gezeigten Ausführungsformen der Figuren 3 und 4 nur zwei mögliche Formen des volumenelastischen Elementes 50 dar. Denkbar sind natürlich auch andere dreidimensionale Strukturen, sofern sie einen störungsfreien Durchfluß des Fluids gewähren.

Weiterhin lassen sich die volumenelastischen Elemente 50 prinzipiell in jedem fluidführenden Element 12, 14, 16 der Reinigungsanlage 10 integrieren. Solch eine konkrete Ausführungsform kann in den einzelnen Elementen 12, 14, 16 unterschiedlich verwirklicht werden, das heißt, entsprechend den technischen Erfordernissen können diese als Schicht und/oder dreidimensionale Struktur vorliegen.

Das volumenelastische Element 50 besteht beispielsweise aus einem Elastomer, insbesondere Kautschuk, wie Ethylen-Propylen-Dien-Kautschuk (EPDM). Dieses Elastomer zeichnet sich durch seine Beständigkeit gegenüber Isopropylalkohol, Ethanol, Glycol, Tensiden oder dergleichen aus, welche als gängige Zusatzstoffe für eine Waschflüssigkeit in Reinigungsanlagen 10 eingesetzt werden. So wurde unter anderem bei einer Lagerung über 100 h bei 80°C in Isopropylalkohol lediglich eine Längenschrumpfung von zirka 7 % festgestellt. Einfrierprüfungen mit volumenelastischen Elementen 50 aus diesem Werkstoff und Wasser als Fluid zeigten, daß in der erläuterten Austrittsvorrichtung 16 der Druckanstieg infolge des Erstarrens des Wassers kompensiert werden konnte und es zu keinerlei Verformung beziehungsweise Beschädigung kam.

## Patentansprüche

1. Reinigungsanlage, insbesondere für Scheinwerfer, Fahrzeugscheiben oder dergleichen von Kraftfahrzeugen, mit einer hydraulischen Fördereinrichtung, die ein gefrierfähiges Fluid, insbesondere Wasser, von einem Vorratsbehälter zu wenigstens einer, einem zu reinigenden Objekt zugeordneten Austrittsvorrichtung fördert, **dadurch gekennzeichnet**, daß den fluidführenden Elementen (12, 14, 16) der Reinigungsanlage (10) wenigstens ein volumenelastisches Element (50) zugeordnet ist.

2. Reinigungsanlage nach Anspruch 1, **dadurch gekennzeichnet**, daß das volumenelastische Element (50) als eine Schicht (56) auf einer Innenseite der Elemente (12, 14, 16) aufgebracht ist, und/oder daß das volumenelastische Element (50) als eine dreidimensionale Struktur, vorzugsweise rohrförmig, im Inneren der fluidführenden Elemente (12, 14, 16) untergebracht ist.

3. Reinigungsanlage nach einem der vorhergehenden Ansprüche, **dadurch gekennzeichnet**, daß das volumenelastische Element (50) ein Elastomer ist.

4. Reinigungsanlage nach Anspruch 3, **dadurch gekennzeichnet**, daß das volumenelastische Element (50) ein Kautschuk ist, insbesondere Ethylen-Propylen-Dien-Kautschuk.

5. Reinigungsanlage nach einem der vorhergehenden Ansprüche, **dadurch gekennzeichnet**, daß das volumenelastische Element (50) ein gasgefüllter Hohlkörper oder eine Einlage mit geringer Dichte und hohem Porenanteil ist.

6. Reinigungsanlage nach einem der vorhergehenden Ansprüche, **dadurch gekennzeichnet**, daß die Fördereinrichtung (12) eine Pumpe, insbesondere eine Hochdruckpumpe, ist.

7. Reinigungsanlage nach einem der vorhergehenden Ansprüche, **dadurch gekennzeichnet**, daß die Austrittsvorrichtung (16) geeignete Elemente zur Ausbildung eines Sprühkegels (32) oder Fluidstrahls aufweist.

8. Reinigungsanlage nach Anspruch 7, **dadurch gekennzeichnet**, daß die Austrittsvorrichtung (16) eine Ventildüse (30) besitzt.

9. Reinigungsanlage nach Anspruch 8, **dadurch gekennzeichnet**, daß die Ventildüse (30) auf einem Kopf (28) eines Hohlkolbens (26) sitzt, der mittels eines Federelementes (42) reversibel in einem Zylinder (24) gelagert ist.

10. Reinigungsanlage nach einem der vorhergehenden Ansprüche, **dadurch gekennzeichnet**, daß die Austrittsvorrichtung (16) in einen Stoßfänger (38) integriert ist.

11. Reinigungsanlage nach Anspruch 10, **dadurch gekennzeichnet**, daß die Austrittsvorrichtung (16) in einer Ruhelage unterhalb einer Klappe (60) des Stoßfängers (58) angeordnet ist und ein Kopf (28) der Austrittsvorrichtung (16) in einer ausgefahrenen Lage oberhalb der Klappe (60) liegt.
